# EUROPÄISCHE PATENTSCHRIFT

(11) **EP 1 465 029 B1**
(45) Veröffentlichungstag und Bekanntmachung des Hinweises auf die Patenterteilung: **14.06.2006**
(21) Anmeldenummer: 03007335.7
(22) Anmeldetag: 01.04.2003
(51) Int. Cl.: G05B 19/048, G05B 23/02, G05B 19/418

(54) **Steuergerät, Steuermodul, Modulbatterie und Steuerungssystem**
Control device, control module, module array and control system
Dispositif de commande, module de commande, batterie de module et système de commande

(43) Veröffentlichungstag der Anmeldung: 06.10.2004
(73) Patentinhaber: FESTO AG & Co, 73734 Esslingen (DE)
(72) Erfinder: Uwe Gräff, 73760 Ostfildern (DE); Heinz Hohner, 73734 Esslingen (DE); Christian Waldeck, 73734 Esslingen (DE)
(74) Vertreter: Abel, Martin

(56) Entgegenhaltungen:
- EP-A- 0 111 871
- EP-A- 0 964 325
- WO-A-01/77534
- DE-A- 10 119 151
- DE-A- 10 137 671
- PATENT ABSTRACTS OF JAPAN vol. 1996, no. 02, 29. Februar 1996 (1996-02-29) & JP 07 261831 A (MEIDENSHA CORP), 13. Oktober 1995 (1995-10-13)
- PATENT ABSTRACTS OF JAPAN vol. 2002, no. 02, 2. April 2002 (2002-04-02) & JP 2001 282312 A (FUJI ELECTRIC CO LTD;HAKKO DENKI KK), 12. Oktober 2001 (2001-10-12)

## Beschreibung

Die Erfindung betrifft ein Steuergerät zur Steuerung einer Modulbatterie, mit einer ersten externen Bus-Schnittstelle zum Empfang von externen Steuerbefehlen einer überlagerten Steuerung und mit einer internen Bus-Schnittstelle für einen internen Bus, über den mit dem Steuergerät verbundene Batterie-Module der Modulbatterie gemäß der externen Steuerbefehle steuerbar sind und über den die Batterie-Module Meldungen an das Steuergerät senden können. Die Erfindung betrifft ferner ein Steuermodul für ein derartiges Steuergerät, eine Modulbatterie, insbesondere eine fluidtechnische Ventilbatterie, mit einem derartigen Steuergerät sowie ein Steuerungssystem mit derartigen Steuergeräten. Ein solches Steuergerät ist z.B. aus WO 01/77534 bekannt.

Ein Steuergerät der eingangs genannten Art wird von einer überlagerten Steuerung, beispielsweise einer speicherprogrammierbaren Steuerung, angesteuert und erhält von dieser über den externen Bus Steuerbefehle. Bei dem Bus handelt es sich beispielsweise um einen Feldbus oder um einen Ethernet-Bus, z.B. einen Industrial-Ethernet-Bus. Das Steuergerät setzt die auf dem externen Bus empfangenen Steuerbefehle in lokale Steuerbefehle um und übermittelt diese Steuerbefehle an die Module der Modulbatterie. Bei diesen Modulen handelt es sich beispielsweise um ein Ausgabemodule, Aktoren, Ventilmodule oder dergleichen. Die Modulbatterie dient beispielsweise der Ansteuerung einer Maschine, Anlage oder einzelner Arbeitsgeräte. Die anzusteuernden Einrichtungen werden beispielsweise durch Fluidkraft insbesondere pneumatisch, betrieben. Dazu sind beispielsweise pneumatische Aktoren an Ventilmodule der Modulbatterie angeschlossen.

Die Zweckbestimmung des externen Busses, beispielsweise des Feldbusses, ist eine zuverlässige und schnelle Übertragung von Steuerbefehlen. In der umgekehrten Richtung können auch Meldungen übertragen werden. Die Meldungen sind möglichst kompakt zu halten, damit der für Steuerungszwecke vorgesehene Bus nicht überlastet wird. Ferner sind Meldungen beispielsweise auch wegen eines auf dem Bus verwendeten Protokolls üblicherweise kompakt.

An die überlagerte Steuerung kann eine visualisierungseinrichtung, beispielsweise ein Personal-Computer (PC), angeschlossen sein, mit der Funktionen der unterlagerten Modulbatterie(n) visualisiert werden können. Basis hierfür sind beispielsweise die von der Modulbatterie über den Feldbus gesendeten Meldungen. Die überlagerte Steuerung und/oder die Visualisierungseinrichtung müssen auf umständliche Weise aus den über den Feldbus übertragenen Meldungen, die einen geringen Informationsgehalt aufweisen, Visualisierungsdaten generieren.

Die Generierung der visualisierungsdaten ist um umständlich. Zudem sind zahlreiche Bedienereingriffe notwendig, um die Generierung der Visualisierungsdaten zu konfigurieren. Aufgrund des begrenzten Informationsgehaltes der von der Modulbatterie über den Feldbus übermittelten Meldungen sind häufig wesentliche Teile des durch die Modulbatterie gesteuerten Prozesses nicht darstellbar.

Es ist daher die Aufgabe der vorliegenden Erfindung, Vorrichtungen bereitzustellen, mit denen auf komfortable Weise Visualisierungsdaten zur Visualisierung von einer oder mehreren Funktionen der Modulbatterie ausgebbar sind.

Bei einem Steuergerät der eingangs genannten Art ist zur Lösung der Aufgabe eine zweite externe Busschnittstelle vorgesehen, über die Visualisierungsdaten zur Visualisierung mindestens einer Funktion der Modulbatterie ausgebbar sind.

In entsprechender Weise ist bei einem Steuermodul, das die Funktionen eines Steuergeräts der eingangs genannten Art bereitstellt, eine zweite Betriebsart vorgesehen, bei der es über eine zweite externe Busschnittstelle die Visualisierungsdaten zur Visualisierung mindestens einer Funktion der Modulbatterie ausgibt. Die erfindungsgemäße Modulbatterie, bei der es sich beispielsweise um eine fluidtechnische Ventilbatterie handelt, ist mit einem erfindungsgemäßen Steuergerät und/oder mit einem oder mehreren erfindungsgemäßen Steuermodulen ausgestattet. Bei einem erfindungsgemäßen Steuerungssystem kommen erfindungsgemäße Steuergeräte zur Anwendung.

Ein Grundgedanke der Erfindung ist, für unterschiedliche Zwecke unterschiedliche Busse zu verwenden. Für die Steuerungsaufgaben wird dediziert ein für Steuerungszwecke optimierter Bus verwendet, an den das erfindungsgemäße Steuergerät mit der ersten externen Busschnittstelle angeschlossen ist. Für Visualisierungsdaten, die zur Visualisierung einer Funktion der Modulbatterie, z.B. einer Fehlfunktion, eines Graphen, einer Messwertreihe oder dergleichen, dienen, ist die zweite externe Busschnittstelle vorgesehen. Der zweite externe Bus ist für diese Visualisierungszwecke optimiert. Er stellt beispielsweise eine größere Bandbreite zur Verfügung als der erste Bus.

An den ersten und an den zweiten Bus können jeweils mehrere erfindungsgemäße Steuergeräte angeschlossen sein, die z.B. von einer gemeinsamen überlagerten Steuerung, beispielsweise einer speicherprogrammierbaren Steuerung, gesteuert werden. Diese kann in Echtzeit Steuerbefehle an die unterlagerten erfindungsgemäßen Steuergeräte senden. An den zweiten Bus, über den die erfindungsgemäße Steuergeräte Visualisierungsdaten senden, ist beispielsweise ein Personalcomputer als Ausgabevorrichtung oder Visualisierungsvorrichtung angeschlossen. Die Visualisierungsdaten werden beispielsweise als HTML-Daten übermittelt, die die Visualisierungsvorrichtung mittels eines Browsers ausgeben kann.

Vorteilhafte Ausgestaltungen der Erfindung ergeben sich aus den abhängigen Ansprüchen sowie aus der Beschreibung.

Zweckmäßigerweise ist die erste externe Busschnittstelle echtzeitfähig. Entsprechend ist der erste externe Bus vorteilhaft ein Echtzeit-Bus. Im Unterschied zu den Steuerbefehlen können die Visualisierungsdaten im einen oder anderen Fall auch etwas verzögert übertragen werden. Die zweite externe Busschnittstelle muss nicht echtzeitfähig sein. Zweckmäßigerweise ist die zweite externe Busschnittstelle aber ebenfalls echtzeitfähig.

Die zweite externe Busschnittstelle weist vorzugsweise eine höhere Übertragungsrate auf als die erste externe Busschnittstelle. Dementsprechend können die Visualisierungsdaten, die einen großen Umfang aufweisen können, schnell übertragen werden. In diese Richtung zielt auch eine zweite zweckmäßige Eigenschaft der Busschnittstelle, nämlich dass über die zweite externe Busschnittstelle längere Nachrichten übermittelbar sind als über die erste Bus-Schnittstelle. In eine einzige Nachricht können große Mengen von Visualisierungsdaten gepackt werden. Im Unterschied dazu sind typische Steuerbefehle kurz, wofür entsprechend kürzere Nachrichten ausreichend sind.

Das Steuergerät bedient die erste externe Busschnittstelle gegenüber der zweiten externen Busschnittstelle zweckmäßigerweise vorrangig. Dementsprechend werden Steuerbefehle mit Vorrang abgearbeitet, wohingegen Visualisierungsdaten, beispielsweise im Falle einer großen Belastung des Steuergerätes, nötigenfalls verzögert übertragen werden können.

Die erste externe Busschnittstelle ist zweckmäßigerweise eine Feldbus-Schnittstelle, beispielsweise eine Profibus-Schnittstelle, eine CANopen-Schnittstelle, eine Interbusschnittstelle oder dergleichen. Zwar kann der interne Bus der Modulbatterie ebenfalls ein Feldbus sein. Zweckmäßigerweise wird jedoch ein proprietärer Bus verwendet, der im Hinblick auf Datenübertragungsraten, Geschwindigkeit oder dergleichen optimiert ist. Die zweite externe Schnittstelle ist zweckmä-ßigerweise eine Ethernet-Schnittstelle, beispielsweise eine Industrial-Ethernet-Schnittstelle.

Zweckmäßigerweise sind die erste und/oder die zweite externe Busschnittstelle durch ein auswechselbares Bus-Modul realisiert. Je nach Bus-Modul können unterschiedliche BusProtokolle bereitgestellt werden. Beispielsweise können für Profibus und CANopen-Bus unterschiedliche Bus-Module vorhanden sein. Diese Maßnahme ermöglicht eine einfache Adaption an die jeweils Prozesssteuerungsumgebung, das heißt beispielsweise an das von der übergeordneten Steuerung verwendete Bus-Protokoll.

Die visualisierungsdaten werden zweckmäßigerweise ganz oder teilweise anhand von von den Batteriemodulen gesendeten Meldungen gebildet. Visualisierungsdaten, bei denen die Meldungen der Batterie-Module nicht erforderlich sind, können beispielsweise mitprotokollierte oder mitgehörte Steuerbefehle, Parametrierungen des Steuergerätes oder dergleichen sein.

Die Visualisierungsdaten weisen zweckmäßigerweise ein durch einen Internet-Browser darstellbares Format auf. Sie sind beispielsweise in HTML (Hypertext Markup Language) kodiert. Auf diese Weise kann ein üblicher Personal-Computer zur Anzeige der Visualisierungsdaten verwendet werden.

Die Batterie-Module sind zweckmäßigerweise auswechselbar. Bei den Batterie-Modulen handelt es sich beispielsweise um fluidtechnische Ventilmodule, beispielsweise pneumatische Ventilmodule, um Ein-Ausgabe-Module, Aktormodule, Sensormodule oder dergleichen.

Das Steuergerät enthält vorzugsweise eine speicherprogrammierbare Steuerung (SPS) zur Steuerung der Batterie-Module. Dementsprechend zeichnet es sich durch eine große Zuverlässigkeit aus.

Zweckmäßigerweise ist eine Bediengeräteschnittstelle zum Anschluss eines lokalen Bedien- und/oder Visualisierungsgeräts vorhanden. Über diese lokale Schnittstelle wird speziell ein lokales Bedien/Visualisierungsgerät angeschlossen. Das Bedien/visualisierungsgerät ist dediziert dem erfindungsgemäßen Steuergerät lokal zugeordnet. Demgegenüber können an den zweiten Bus, über die die Visualisierungsdaten ausgegeben werden, mehrere erfindungsgemäße Steuergeräte und/oder mehrere Visualisierungsvorrichtungen, beispielsweise mehrere PCs angeschlossen sein.

Die Batterie-Module sind zweckmäßigerweise auswechselbar. Sie bilden jedoch vorteilhaft einen integralen Bestandteil des Steuergeräts. Damit wird eine kompakte Baueinheit, die die Batterie-Module sowie das Steuergerät enthält, gebildet.

Die zweite Bus-Schnittstelle ist vorteilhafterweise zur Bereitstellung erster und zweiter Visualisierungsdaten parametrierbar. Ein Bediener kann beispielsweise einstellen, welche Art von Visualisierungsdaten an der Bus-Schnittstelle bereitgestellt werden sollen. Beispielsweise ist einstellbar, ob Messwerte als Tabelle und/oder als grafische Funktion dargestellt werden sollen.

Die weiteren Maßnahmen ermöglichen ein optimiertes modulares Konzept, bei dem das Steuergerät zwei oder mehr Steuermodule enthält. Jedem Steuermodul kommt dabei eine spezielle Funktion zu.

Zweckmäßigerweise weist das Steuergerät ein erstes und ein zweites Steuermodul gleicher Bauart auf. Das erste Steuermodul stellt die Steuerungsfunktion für die Steuerung der Batterie-Module über den internen Bus bereit. Das zweite Steuermodul dient zur Bereitstellung der visualisierungsdaten für die zweite Bus-Schnittstelle. Die zweite externe BusSchnittstelle ist zweckmäßigerweise an dem zweiten Steuermodul angeordnet. Das erste Steuermodul stellt vorteilhafterweise dem zweiten Steuermodul die zur Generierung der Visualisierungsdaten erforderlichen Rohdaten bereit. Es ist aber auch möglich, dass das zweite Steuermodul den auf dem internen Bus übertragenen Datenverkehr, beispielsweise Meldungen der Batterie-Module, mithört und anhand dieser Information die Visualisierungsdaten generiert und an der zweiten Bus-Schnittstelle bereitstellt.

Ein erfindungsgemäßes Steuermodul ist zweckmäßigerweise wahlweise zur Bereitstellung der Steuerungsfunktion für die Steuerung der Batterie-Module über den internen Bus oder zur Bereitstellung der Visualisierungsdaten für die zweite externe Bus-Schnittstelle ausgestaltet. Die erste und die zweite Betriebsart sind vorteilhafterweise einstellbar. Hierfür kann beispielsweise ein Betriebsarten-Schalter vorgesehen sein. Es ist aber auch möglich, dass das Steuermodul seine jeweilige Betriebsart selbst ermittelt, sozusagen eine Autodetect-Funktion enthält. Beispielsweise kann das als zweites Steuermodul dienende Steuermodul an einem an die zweite externe Bus-Schnittstelle angeschlossenen Steckverbinder oder dergleichen erkennen, dass es als Visualisierungsmodul dienen soll.

Vorteilhafterweise ist ein erfindungsgemäßes Steuermodul zu einer dritten Betriebsart einstellbar, bei der es über die zweite Bus-Schnittstelle Steuerbefehle einer überlagerten Steuerung empfangen kann. Bei dieser dritten Betriebsart kann bei einem erfindungsgemäßen Steuergerät die erste externe Bus-Schnittstelle, beispielsweise eine Feldbus-Schnittstelle nicht vorhanden sein. Das Steuermodul ist somit universell einsetzbar. Es kann ohne eine überlagerte Steuerung arbeiten, als Feldbus-Slave, wofür gegebenenfalls ein spezielles Feldbus-Modul vorhanden ist, als über beispielsweise ein Ethernet ansteuerbares Steuerungsmodul sowie in der erfindungsgemäßen Weise als Visualisierungs-/Monitoring-Modul, das die Visualisierungsdaten bereitstellt.

Das erfindungsgemäße Steuermodul weist zweckmäßigerweise auch die erste Bus-Schnittstelle, beispielsweise eine Feldbus-Schnittstelle, auf. Es ist aber auch möglich, das hierfür ein separates Bus-Modul vorhanden ist.

Nachfolgend wird die Erfindung anhand eines Ausführungsbeispiels unter Bezugnahme auf die Zeichnung näher erläutert. Es zeigen:

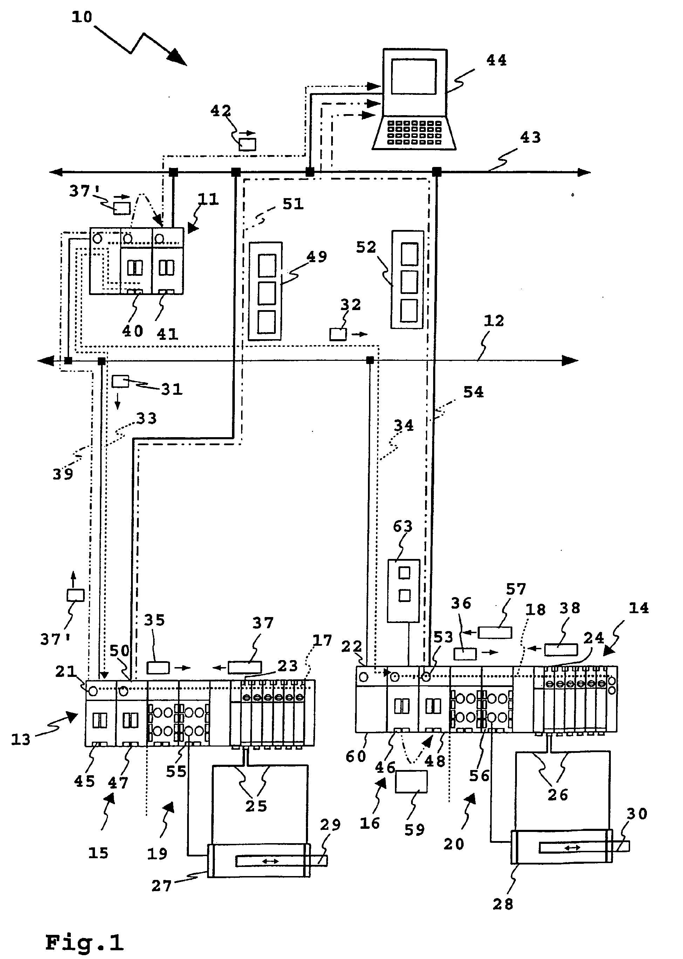

- Figur 1: ein erfindungsgemäßes Steuerungssystem mit erfindungsgemäßen Steuergeräten, einer überlagerten Steuerung sowie einer Visualisierungsvorrichtung ,
- Figur 2: eine schematische funktionale Ansicht eines Steuergerätes gemäß Figur 1, und
- Figur 3: erfindungsgemäße Steuermodule des Steuergeräts gemäß Figur 2 zur Steuerung einer Modulbatterie und zur Bereitstellung von visualisierungsdaten in einer Ansicht schräg von oben.

Bei einem Steuerungssystem 10 steuert ein überlagerte Steuerung 11, beispielsweise eine speicherprogrammierbare Steuerung (SPS), über einen ersten externen Bus 12, beispielsweise einen Feldbus, Modulbatterien 13, 14. Der Bus 12 ist für Steuerungsaufgaben vorgesehen, das heißt er ist beispielsweise echtzeitfähig.

Steuergeräte 15, 16 der Modulbatterien 13, 14 bilden aus von der übergeordneten Steuerung 11 empfangenen Steuerbefehlen lokale Steuerbefehle und versenden diese über interne Busse 17, 18 an Batterie Module 19, 20 der Modulbatterien 13, 14. Die Steuergeräte 15, 16 und die Batterie-Module 19 bzw. 20 sind aneinandergereiht und bilden insgesamt die Modulbatterien 13, 14. Beispielsweise handelt es sich bei dem Batterie-Modulen 19, 20 um Sensor-Module, Diagnose-Module, AktorModule oder vorzugsweise um Ventil-Module. Zum Beispiel steuern Ventil-Module 23, 24 über Fluidleitungen 25, 26 fluidtechnische Aktoren, z.B. Pneumatik-Zylinder 27, 28 an. In Abhängigkeit von diesen Ansteuerungen bewegen sich Ventilglieder 29, 30 der Zylinder 27, 28 hin und her.

Beispielsweise sendet die übergeordnete Steuerung 11 Steuerbefehle 31, 32 an die Steuergeräte 15, 16 über Busverbindungen 33, 34, die auf dem ersten externen Bus 12, sozusagen dem Steuerungsbus, zwischen der überlagerten Steuerung 11 und den Modulbatterien 13, 14 vorhanden sind. Die Steuergeräte 15, 16 generieren aus den externen Steuerbefehlen 31, 32 interne Steuerbefehle 35, 36, die sie über die beiden internen Busse 17, 18 an die Ventilmodule 23, 24. Die Ventilmodule 23, 24 steuern die pneumatischen Aktoren, die Zylinder 27, 28 gemäß den Steuerbefehlen 35, 36 an, wobei beispielsweise die Ventilglieder 29, 30 aus- oder eingefahren werden.

In Überwachungsrichtung melden die Ventilmodule 23, 24, die beispielsweise elektrisch betätigte pneumatische Vorsteuerventile enthalten, den Vollzug der Steuerbefehle 35, 36 durch Meldungen 37, 38.

Anhand der Meldung 37 wird im folgenden zunächst einer bekannte Meldungsverarbeitung näher erläutert. Das Steuergerät 15 generiert aus der Meldung 37 eine Meldung 37', die gegenüber der ursprünglich verhältnismäßig detaillierten und informationsreichen Meldung 37 einen reduzierten Informationsgehalt aufweist. Somit wird der an sich für Steuerungszwecke vorgesehene Bus 12 verhältnismäßig wenig belastet. Ein zur Steuerung der Modul-Batterien 13, 14 vorgesehenes Steuermodul 40 der übergeordneten Steuerung 11 übermittelt die Meldung 37' einem Visualisierungsmodul 41. Aus der Meldung 37' generiert das Visualisierungsmodul 41 Visualisierungsdaten 42. Die Visualisierungsdaten 42 weisen einen gegenüber der Meldung 37' erweiterten Informationsgehalt auf. Beispielsweise ist die Meldung 37' graphisch aufbereitet. Die Ausgestaltung der Visualisierungsdaten 42 durch das Visualisierungsmodul 41 ist durch einen Bediener programmierbar, wofür jedoch ein erheblicher Programmierungsaufwand erforderlich ist.

Das Visualisierungsmodul 41 übermittelt die Visualisierungsdaten 42, bei denen es sich beispielsweise um HTML-Daten handelt, über einen zweiten externen Bus 43 an eine Visualisierungsvorrichtung 44. Der Bus 43 wird beispielsweise durch ein lokales Netzwerk, z.B. ein LAN (Local Area Network), oder durch das Internet gebildet. Die Visualisierungsvorrichtung 44 ist beispielsweise ein Personalcomputer mit einem Browser, der die Visualisierungsdaten 42 darstellen kann. Es ist aber auch möglich, das zur Darstellung der visualisierungsdaten 42 ein spezielles Visualisierungsprogramm der visualisierungsvorrichtung notwendig ist. In gleicher Weise wie die Meldung 37 kann das Steuergerät 15 auch weitere Informationen der Modul-Batterie 13 an die überlagerte Steuerung und somit an die Visualisierungsvorrichtung 42 übermitteln, beispielsweise Messwertreihen oder dergleichen. Dabei ist die beschränkte Übertragungskapazität des Busses 12 zu beachten. In Melde- bzw. Überwachungsrichtung ist dementsprechend der Informationsfluss bei der bekannten Technik kompliziert und führt möglicherweise sogar zu Engpässen.

### Dem hilft die Erfindung folgendermaßen ab:

Die Steuergeräte 15, 16 enthalten neben Steuermodulen 45, 46 die zur Umsetzung von Steuerbefehlen der überlagerten Steuerung 11 dienen, weitere Steuermodule 47, 48, die im folgenden Visualisierungsmodule 47, 48 genannt werden. Die Visualisierungsmodule 47, 48 stellen Visualisierungsdaten zur Visualisierung einer oder mehrerer Funktionen der Modulbatterien 13, 14 an der Visualisierungsvorrichtung 44 bereit. Beispielsweise handelt es sich dabei um Messwertreihen, Grafiken, Störungsprotokolle, Statistiken, elektronische Typenschilder der Batterie-Module 19, 20, Diagnosehistorien, Konfigurationsparameter oder sonstige Konfigurationsdaten oder dergleichen. Jedenfalls weisen die Visualisierungsdaten einen verhältnismäßig großen Datenumfang auf und werden durch die Visualisierungsmodule 47, 48 in komfortabler Weise aufbereitet, so dass sie an der Visualisierungsvorrichtung 44 ohne großen Aufwand, beispielsweise lediglich mit Hilfe eines Internet-Browsers, darstellbar sind.

Die von den Visualisierungsmodulen 47, 48 erzeugten Visualisierungsdaten weisen einen verhältnismäßig großen Datenumfang auf. Dementsprechend ist der zweite externe Bus 43 für derartigen Datenmengen ausgelegt. Beispielsweise handelt es sich um einen Ethernet-Bus auf den mit Hilfe eines Internet-Protokolls, z.B. TCP/IP (Transport Control Protocol/Internet Protocol), Daten übertragen werden. Mit derartigen Protokollen können Nachrichten mit dynamischer Länge erzeugt werden. So können beispielsweise für Visualisierungsdaten, die einen großen Umfang aufweisen, gegebenenfalls längere Nachrichten gebildet und übermittelt werden.

Das Visualisierungsmodul 47 sendet Visualisierungsdaten 49 über eine externe Busschnittstelle 50 auf einer Busverbindung 51 an die Visualisierungsvorrichtung 44. In analoger Weise sendet das Visualisierungsmodul 48 visualisierungsdaten 52 über eine externe Busschnittstelle 53 auf einer Busverbindung 54 auf dem Bus 43 an die Visualisierungsvorrichtung 44.

Die Visualisierungsdaten 49, 52 werden auf unterschiedliche Weise generiert.

Das Visualisierungsmodul 50 des Steuergerätes 15 hört von den Batterie-Modulen 19 auf dem internen Bus 17 gesendete Meldungen mit, beispielsweise die Meldung 37. Ferner sendet beispielsweise ein Überwachungsmodul 55 der Modulbatterie 13 Positionsmesswerte, Temperaturmesswerte oder dergleichen des Pneumatikzylinders 27 an das Visualisierungsmodul 47. Auf dem internen Bus 17 gesendete Meldungen können explizit an das Visualisierungsmodul 47 gerichtet sein, beispielsweise mit Hilfe von dessen Bus-Adresse. Es ist aber auch möglich, dass das Visualisierungsmodul 50 Nachrichten auf dem Bus 17 mithört, die an sich beispielsweise an das Steuermodul 45 oder ein sonstiges Modul der Modul-Batterie 13 gerichtet sind. Anhand der auf dem internen Bus 17 gesendeten Informationen bildet das Visualisierungsmodul 47 die Visualisierungsdaten 49.

Bei dem Steuergerät 16 wird gegenüber dem Steuergerät 15 ein alternatives Visualisierungskonzept verfolgt. Bei dem Steuergerät 16 werden die für die Visualisierungsdaten 52 erforderlichen Rohdaten durch das Steuermodul 46 bereitgestellt. Auf dem internen Bus 18 gesendete Informationen, z.B. die Meldung 38 sowie von einem dem Überwachungsmodul 55 funktional gleichenden Überwachungsmodul 56 gesendete Meldungen 57, werden durch das Steuermodul 46 vorverarbeitet. Derartige Informationen versieht das Steuermodul 46 beispielsweise mit einem Zeitstempel und trägt sie in eine Datenbank 58 ein. Das Visualisierungsmodul 48 fragt von Zeit zu Zeit bei dem Steuermodul 46 Rohdaten 49 ab, die aus dem Inhalt der Datenbank 58 generiert werden. Es ist aber auch möglich, dass das Steuermodul 46 in regelmäßiger Zeitabständen und/oder bei vorbestimmten Ereignissen, beispielsweise bei einer Änderung zumindest eines Wertes in der Datenbank 58 spontan die Rohdaten 59 an das visualisierungsmodul 48 sendet.

Das Visualisierungsmodul 48 könnte man beispielsweise auch als einen Web-Server bezeichnen. Es generiert aus den Rohdaten 59 die Visualisierungsdaten 52 beispielsweise in einem durch einen Internet-Browser darstellenden Format, beispielsweise als HTML-Daten, als JAVA-Skripte oder dergleichen. Jedenfalls sind die Visualisierungsdaten 52 ohne weiteres Zutun an der Visualisierungsvorrichtung 44 darstellbar. Beispielsweise wird an der Visualisierungsvorrichtung 44 zur Abfrage der Visualisierungsdaten 52 lediglich eine Adresse, z.B. die Internetadresse, der Modul-Batterie 14 eingegeben. Das Visualisierungsmodul 48 stellt dann an der Visualisierungsvorrichtung 44 eine Bedienschnittstelle bereit, an der die Visualisierungsdaten 52 abgefragt werden können. Beispielsweise können Messreihen, Temperaturverläufe, Druckschwankungen in der Fluidleitungen 26 oder dergleichen abgefragt werden.

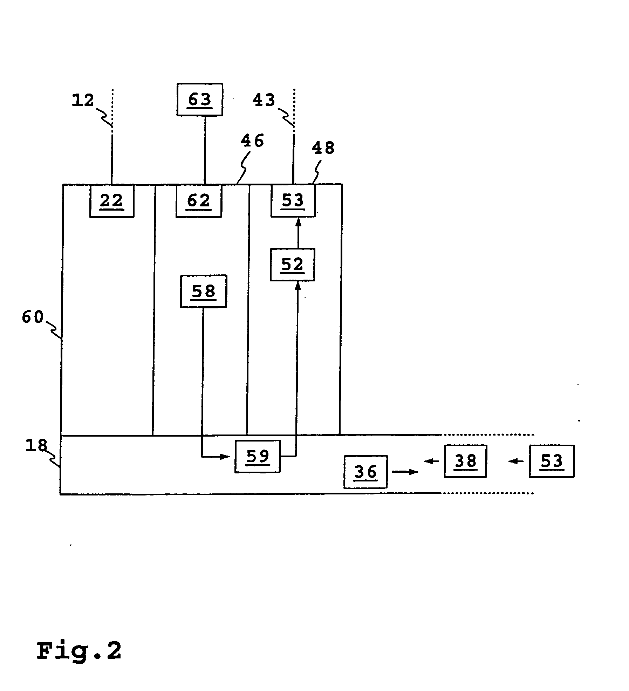

In der Figur 2 ist das Steuergerät 16 aus funktionaler Sicht dargestellt. Das Steuergerät 16 enthält neben den Steuermodulen 46, 48 ein Bus-Modul 60 mit der ersten externen Bus-Schnittstelle 22 für den externen Bus 12. Dies stellt einen Unterschied zu dem Steuergerät 15 dar, bei dem das Steuermodul 45 die Busschnittstelle 21 für den Bus 12 enthält. Jedenfalls erlaubt das Busmodul 60 eine einfache Anpassung an unterschiedliche Busprotokolle oder dergleichen. Das Busmodul 60 dient als Bindeglied zwischen dem Steuermodul 46 und dem Bus 12. Die Module 60, 46, 48 kommunizieren miteinander über den internen Bus 18. Beispielsweise übermittelt das Steuermodul 46 die Rohdaten 59 über den internen Bus 18 an das Visualisierungsmodul 48.

Das Steuermodul 46 weist eine Bediengeräteschnittstelle 62 auf, an die im Ausführungsbeispiel ein lokales Bedien- und/oder Visualisierungsgerät 63 angeschlossen ist. Mit dem Bediengerät 63 können beispielsweise Schwellwerte parametriert werden oder können Werte bei dem Steuermodul 46, z.B. Messwerte, abgefragt werden.

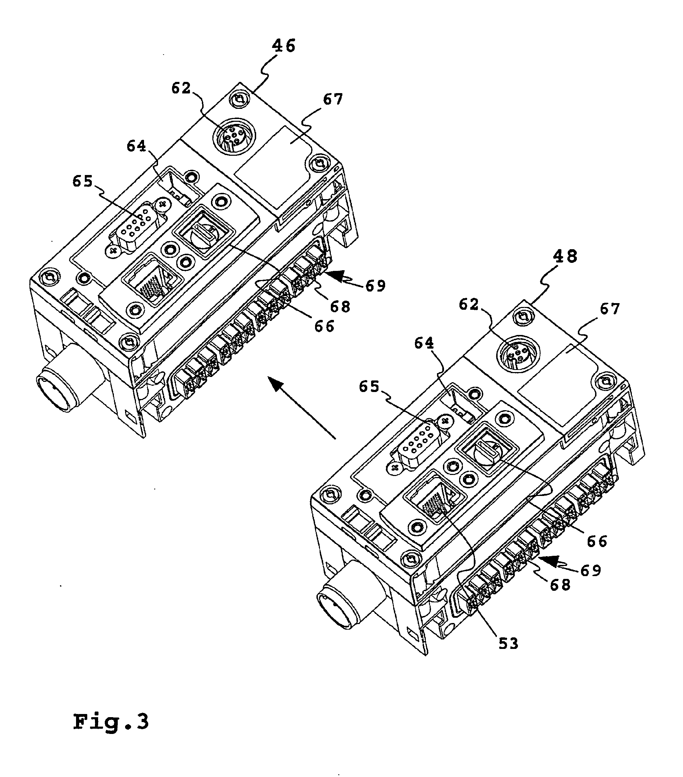

Die Steuermodule 46, 48 sind vorliegend Module gleicher Bauart, die beispielsweise einen Mikroprozessor, Speicher sowie Ein- oder Ausgabeschnittstellen aufweisen. Die Steuermodule 46, 48 können unmittelbar aneinander gereiht werden. Anhand der in Figur 3 sichtbaren Bedien- und Anschlusselemente werden im folgenden die einzelnen Funktionsweisen der Steuermodule 46, 48 näher erläutert.

Mit Hilfe eines Betriebsartenschalters 64 kann die jeweilige Betriebsart der Steuermodule 46, 48 eingestellt werden. Beispielsweise ist bei dem Steuermodul 46 die Funktion zur Steuerung der Batterie-Module 20 vorgegeben, beim Steuer- bzw. Visualisierungsmodul 48 die Funktion als Visualisierungsmodul.

Über eine Programmierschnittstelle 65 können die Steuermodule 46, 48 programmiert werden. Beispielsweise können Betriebssysteme, Funktionsprogramme oder dergleichen in einen Flash-Speicher der Module 46, 48 geladen werden. Anwenderdefinierte Programme, beispielsweise über die Programmierschnittstelle 65 geladene Programme, können mittels eines Schalters 46 aktiviert oder gestoppt werden.

Die externe Busschnittstelle 53 ist vorliegend mit Hilfe eines RJ-45 Steckers realisiert. Die Schnittstellen 53, 63, 65 sind vorzugsweise in einer hohen Schutzart, z.B. IP 67, realisiert. Dies ermöglicht einen Einsatz des Steuergerätes 16 unter problematischen Umweltbedingungen, beispielsweise in feuchter und/oder schmutziger Umgebung. Mit Hilfe einer Anzeigevorrichtung 67, die beispielsweise LED's enthält, können Funktionen und/oder Zustände des Steuermoduls 46, 48 und/oder der Modul-Batterie 14 angezeigt werden.

Die Schnittstellen 53, 52, 65 sowie die Anzeigevorrichtung 67 befinden sich an der Oberseite der Steuermodule 46, 48. Über an entgegengesetzten Seiten der Steuermodule 46, 48 vorhandene Mehrfachstecker 68 wird der interne Bus 18 gebildet. Die Module 46, 48 sowie die weiteren Batterie-Module 20 der Modulbatterie 14 weisen ebenfalls Mehrfachstecker der Art des Mehrfachsteckers 68 auf und sind über diese Mehrfachstecker miteinander verbunden. Der Mehrfachstecker 68 bildet eine interne Bus-Schnittstelle 69.

## Patentansprüche

1. Steuergerät zur Steuerung einer Modulbatterie (13, 14), mit einer ersten externen Bus-Schnittstelle (21, 22) zum Empfang von externen Steuerbefehlen (31, 32) einer überlagerten Steuerung (11) und mit einer internen Bus-Schnittstelle (69) für einen internen Bus (17, 18), über den mit dem Steuergerät (15, 16) verbundene Batterie-Module (19, 20) der Modulbatterie (13, 14) gemäß der externen Steuerbefehle (31, 32) steuerbar sind und über den die Batterie-Module (19, 20) Meldungen an das Steuergerät (15, 16) senden können, **dadurch gekennzeichnet, dass** es eine zweite externe Bus-Schnittstelle (50, 53) aufweist, über die visualisierungsdaten (49, 52) zur Visualisierung mindestens einer Funktion der Modulbatterie (13, 14) ausgegeben werden.

2. Steuergerät nach Anspruch 1, **dadurch gekennzeichnet, dass** die erste externe Bus-Schnittstelle (21, 22) echtzeitfähig ist.

3. Steuergerät nach Anspruch 1 oder 2, **dadurch gekennzeichnet, dass** die zweite externe Bus-Schnittstelle (50, 53) eine höhere Datenübertragungsrate aufweist als die erste externe Bus-Schnittstelle (21, 22) und/oder über die zweite externe Bus-Schnittstelle (50, 53) längere Nachrichten übermittelbar sind als über die erste Bus-Schnittstelle (21, 22).

4. Steuergerät nach einem der vorhergehenden Ansprüche, **dadurch gekennzeichnet, dass** es die erste externe Bus-Schnittstelle (21, 22) gegenüber der zweiten externen Bus-Schnittstelle (50, 53) vorrangig bedient.

5. Steuergerät nach einem der vorhergehenden Ansprüche, **dadurch gekennzeichnet, dass** die erste externe Bus-Schnittstelle (21, 22) eine Feldbus-Schnittstelle ist und/oder die zweite externe Schnittstelle (50, 53) eine Ethernet-Schnittstelle ist.

6. Steuergerät nach einem der vorhergehenden Ansprüche, **dadurch gekennzeichnet, dass** die erste und/oder die zweite externe Bus-Schnittstelle (21, 22; 50, 53) durch ein auswechselbares Bus-Modul (60) realisiert sind, wobei in Abhängigkeit von dem jeweiligen Bus-Modul unterschiedliche Bus-Protokolle bereitgestellt werden.

7. Steuergerät nach einem der vorhergehenden Ansprüche, **dadurch gekennzeichnet, dass** die Visualisierungsdaten (49, 52) zumindest teilweise aus von den Batterie-Modulen (19, 20) gesendeten Meldungen (37, 38) gebildet sind.

8. Steuergerät nach einem der vorhergehenden Ansprüche, **dadurch gekennzeichnet, dass** die Visualisierungsdaten (49, 52) ein durch einen Internet-Browser darstellbares Format aufweisen.

9. Steuergerät nach einem der vorhergehenden Ansprüche, **dadurch gekennzeichnet, dass** die insbesondere auswechselbaren Batterie-Module (19, 20) mindestens ein fluidtechnisches Ventilmodul und/oder ein Ein-/Ausgabemodul und/oder ein Eingabemodul und/oder Ausgabemodul enthalten.

10. Steuergerät nach einem der vorhergehenden Ansprüche, **dadurch gekennzeichnet, dass** es eine speicherprogrammierbare Steuerung zur Steuerung der Batterie-Module (19, 20) enthält.

11. Steuergerät nach einem der vorhergehenden Ansprüche, **dadurch gekennzeichnet, dass** es eine Bediengeräteschnittstelle (62) zum Anschluss eines lokalen Bedien- und/oder Visualisierungsgeräts (63) aufweist.

12. Steuergerät nach einem der vorhergehenden Ansprüche, **dadurch gekennzeichnet, dass** die Batterie-Module (19, 20) einen integralen Bestandteil des Steuergeräts (15, 16) bilden.

13. Steuergerät nach einem der vorhergehenden Ansprüche, **dadurch gekennzeichnet, dass** die zweite Bus-Schnittstelle zur Bereitstellung erster oder zweiter Visualisierungsdaten (49, 52) parametrierbar ist.

14. Steuergerät nach einem der vorhergehenden Ansprüche, **dadurch gekennzeichnet, dass** es ein erstes und zweites Steuermodul (46, 48) gleicher Bauart aufweist, dass das erste Steuermodul (46) die Steuerungsfunktion für die Steuerung der Batterie-Module (19, 20) über den internen Bus (17, 18) bereitstellt, und dass das zweite Steuermodul (48) zur Bereitstellung der Visualisierungsdaten (49, 52) für die zweite externe Bus-Schnittstelle (50, 53) ausgestaltet ist.

15. Steuergerät nach Anspruch 14, **dadurch gekennzeichnet, dass** das erste Steuermodul (46) dem zweiten Steuermodul (48) Rohdaten (59) zur Generierung der Visualisierungsdaten (49, 52) bereitstellt.

16. Steuermodul für ein Steuergerät (15, 16) nach Anspruch 14 oder 15, **dadurch gekennzeichnet, dass** es wahlweise zur Bereitstellung der Steuerungsfunktion für die Steuerung der Batterie-Module (19, 20) über den internen Bus (17, 18) und zur Bereitstellung der visualisierungsdaten (49, 52) für die zweite externe Bus-Schnittstelle (50, 53) ausgestaltet ist, und dass es zu einer ersten Betriebsart als erstes Steuermodul oder zu einer zweiten Betriebsart als zweites Steuermodul einstellbar ist.

17. Steuermodul nach Anspruch 16, **dadurch gekennzeichnet, dass** es zu einer dritten Betriebsart einstellbar ist, bei der es über die zweite Bus-Schnittstelle Steuerbefehle (31, 32) einer überlagerten Steuerung (11) empfangen kann.

18. Steuermodul nach Anspruch 16 oder 17, **dadurch gekennzeichnet, dass** es die erste externe Bus-Schnittstelle (21, 22) aufweist.

19. Modulbatterie (13, 14), insbesondere fluidtechnische Ventilbatterie, mit mindestens einem Steuergerät (15, 16) nach einem der Ansprüche 1 bis 15 und/oder mindestens einem Steuermodul nach einem der Ansprüche 16 bis 18.

20. Steuerungssystem mit einem ersten externen Bus (12), mit einer überlagerten Steuerung (11) zur Steuerung von mindestens zwei Steuergeräten (15, 16) nach einem der Ansprüche 1 bis 15 über den ersten Bus (12), und mit einem zweiten externen Bus (43) zum Anschluss einer visualisierungsvorrichtung (44), an der von den Steuergeräten (15, 16) bereitgestellte Visualisierungsdaten (49, 52) anzeigbar sind.

## Claims

1. Control unit for the control of a module bank (13, 14), with a first external bus interface (21, 22) to receive external control commands (31, 32) from a higher-level control (11), and with an internal bus interface (69) for an internal bus (17, 18) through which bank modules (19, 20) of the module bank (13, 14) connected to the control unit (15, 16) may be controlled in accordance with the external control commands (31, 32) and via which the bank modules (19, 20) may send messages to the control unit (15, 16), **characterised in that** it has a second external bus interface (50, 53) via which visualisation data (49, 52) for visualising one or more functions of the module bank (13, 14) may be output.

2. Control unit according to claim 1, **characterised in that** the first external bus interface (21, 22) has real-time capability.

3. Control unit according to claim 1 or 2, **characterised in that** the second external bus interface (50, 53) has a higher data transmission rate than the first external bus interface (21, 22) and/or longer messages may be transmitted over the second external bus interface (50, 53) than over the first external bus interface (21, 22).

4. Control unit according to any of the preceding claims, **characterised in that** it uses the first external bus interface (21, 22) in priority over the second external bus interface (50, 53).

5. Control unit according to any of the preceding claims, **characterised in that** the first external bus interface (21, 22) is a field bus interface and/or the second external bus interface (50, 53) is an ethernet interface.

6. Control unit according to any of the preceding claims, **characterised in that** the first and/or the second external bus interface (21, 22; 50, 53) are realised by an interchangeable bus module (60), with different bus protocols being provided for the respective bus modules.

7. Control unit according to any of the preceding claims, **characterised in that** the visualisation data (49, 52) are formed at least partly from messages (37, 38) sent by the bank modules (19, 20).

8. Control unit according to any of the preceding claims, **characterised in that** the visualisation data (49, 52) have a format which may be shown by an internet browser.

9. Control unit according to any of the preceding claims, **characterised in that** the bank modules (19, 20), which are in particular interchangeable, contain at least one fluidic valve module and/or an input/output module and/or an input module and/or an output module.

10. Control unit according to any of the preceding claims, **characterised in that** it contains a program logic control for the control of the bank modules (19, 20).

11. Control unit according to any of the preceding claims, **characterised in that** it has an operating device interface (62) for the connection of a local operating and/or visualisation device (63).

12. Control unit according to any of the preceding claims, **characterised in that** the bank modules (19, 20) form an integral part of the control unit (15, 16).

13. Control unit according to any of the preceding claims, **characterised in that** the second bus interface may be parameterised to provide first or second visualisation data (49, 52).

14. Control unit according to any of the preceding claims, **characterised in that** it has a first and second control module (46, 48) of identical design, that the first control module (46) provides the control function for control of the bank modules (19, 20), and that the second control module (48) is designed to provide the visualisation data (49, 52) for the second external bus interface (50, 53).

15. Control unit according to claim 14, **characterised in that** the first control module (46) provides the second control module (48) with raw data (59) for generation of the visualisation data (49, 52).

16. Control module for a control unit (15, 16) according to claim 14 or 15, **characterised in that** it is designed alternatively to provide the control function for control of the bank modules (19, 20) via the internal bus (17, 18), and to provide the visualisation data (49, 52) for the second external bus interface (50, 53), and that it may be set to a first operating mode as first control module or to a second operating mode as second control module.

17. Control module according to claim 16, **characterised in that** it may be set to a third operating mode in which it is able to receive control commands (31, 32) from a higher-level control (11) via the second bus interface.

18. Control module according to claim 16 or 17, **characterised in that** it has the first external bus interface (21, 22).

19. Module bank (13, 14), in particular a fluidic valve bank, with at least one control unit (15, 16) according to any of claims 1 to 15 and/or at least one control module according to any of claims 16 to 18.

20. Control system with a first external bus (12), with a higher-level control (11) for the control of at least two control units (15, 16) according to any of claims 1 to 15 via the first bus (12), and with a second external bus (43) for the connection of a visualisation device (44) on which visualisation data (49, 52) provided by the control units (15, 16) may be displayed.

## Revendications

1. Appareil de commande pour commander une batterie modulaire (13, 14), comportant une première interface de bus externe (21, 22) pour la réception d'instructions de commande externes (31, 32) d'une commande (11) prioritaire et comportant une interface de bus interne (69) pour un bus interne (17, 18) par lequel des modules de batterie (19, 20), reliés à l'appareil de commande (15, 16), de la batterie modulaire (13, 14), peuvent être commandés selon les instructions de commande externes (31, 32) et par lequel les modules de batterie (19, 20) peuvent envoyer des signalisations à l'appareil de commande (15, 16), **caractérisé en ce qu'**il comporte une deuxième interface de bus externe (50, 53) par laquelle des données de visualisation (49, 50) sont émises pour visualiser au moins une fonction de la batterie modulaire (13, 14).

2. Appareil de commande selon la revendication 1, **caractérisé en ce que** la première interface de bus externe (21, 22) fonctionne en temps réel.

3. Appareil de commande selon la revendication 1 ou 2, **caractérisé en ce que** la deuxième interface de bus externe (50, 53) présente une vitesse de transmission des données plus élevée que la première interface de bus externe (21, 22) et/ou par la deuxième interface de bus externe (50, 53) il est possible de transmettre des informations plus longues que par la première interface de bus (21, 22).

4. Appareil de commande selon l'une des revendications précédentes, **caractérisé en ce qu'**il dessert prioritairement la première interface de bus externe (21, 22) par rapport à la deuxième interface de bus externe (50, 53).

5. Appareil de commande selon l'une des revendications précédentes, **caractérisé en ce que** la première interface de bus externe (21, 22) est une interface de bus de champ et/ou la deuxième interface externe (50, 53) est une interface Ethernet.

6. Appareil de commande selon l'une des revendications précédentes, **caractérisé en ce que** la première et/ou la deuxième interface de bus externe (21, 22 ; 50, 53) sont réalisées par un module de bus échangeable (60), différents protocoles de bus étant réalisés en fonction du module de bus respectif.

7. Appareil de commande selon l'une des revendications précédentes, **caractérisé en ce que** les données de visualisation (49, 52) sont formées au moins partiellement à partir des signalisations (37, 38) émises par les modules de batterie (19, 20).

8. Appareil de commande selon l'une des revendications précédentes, **caractérisé en ce que** les données de visualisation (49, 52) présentent un format pouvant être représenté par un browser internet.

9. Appareil de commande selon l'une des revendications précédentes, **caractérisé en ce que** les modules de batterie (19, 20), en particulier échangeables, contiennent au moins un module de soupape fluidique et/ou un module d'entrée/sortie et/ou un module d'entrée et/ou module de sortie.

10. Appareil de commande selon l'une des revendications précédentes, **caractérisé en ce qu'**il contient une commande programmable à mémoire pour la commande des modules de batterie (19, 20).

11. Appareil de commande selon l'une des revendications précédentes, **caractérisé en ce qu'**il comporte une interface d'appareil de commande (62) pour le raccordement d'un appareil local de commande et/ou de visualisation (63).

12. Appareil de commande selon l'une des revendications précédentes, **caractérisé en ce que** les modules de batterie (19, 20) forment partie intégrante de l'appareil de commande (15, 16).

13. Appareil de commande selon l'une des revendications précédentes, **caractérisé en ce que** la deuxième interface de bus peut être paramétrée pour la préparation de premières ou de deuxièmes données de visualisation (49, 52).

14. Appareil de commande selon l'une des revendications précédentes, **caractérisé en ce qu'**il comporte un premier et un deuxième module de commande (46, 48) de même type de construction, **en ce que** le premier module de commande (46) fournit la fonction de commande pour la commande des modules de batterie (19, 20) par l'intermédiaire du bus interne (17, 18), et **en ce que** le deuxième module de commande (48) est conçu pour fournir les données de visualisation (49, 52) pour la deuxième interface de bus externe (50, 53).

15. Appareil de commande selon la revendication 14, **caractérisé en ce que** le premier module de commande (46) fournit au deuxième module de commande (48) des données brutes (59) pour générer les données de visualisation (49, 52).

16. Module de commande pour un appareil de commande (15, 16) selon la revendication 14 ou 15, **caractérisé en ce qu'**il est conçu au choix pour fournir la fonction de commande pour la commande des modules de batterie (19, 20) par l'intermédiaire du bus interne (17, 18) et pour fournir les données de visualisation (49, 52) pour la deuxième interface de bus (50, 53), et **en ce qu'**il peut être réglé sur un premier mode de fonctionnement en tant que premier module de commande ou sur un deuxième mode de fonctionnement en tant que deuxième module de commande.

17. Module de commande selon la revendication 16, **caractérisé en ce qu'**il peut être réglé sur un troisième mode de fonctionnement dans lequel il peut recevoir des instructions de commande (31, 32) d'une commande prioritaire (11), par la deuxième interface de bus.

18. Module de commande selon la revendication 16 ou 17, **caractérisé en ce qu'**il comporte la première interface de bus externe (21, 22).

19. Batterie modulaire (13, 14), en particulier batterie de soupapes fluidiques, comportant au moins un appareil de commande (15, 16) selon l'une des revendications 1 à 15 et/ou au moins un module de commande selon l'une des revendications 16 à 18.

20. Système de commande comportant un premier bus externe (12), comportant une commande prioritaire (11) pour la commande d'au moins deux appareils de commande (15, 16) selon l'une des revendications 1 à 15, par le premier bus (12), et comportant un deuxième bus externe (43) pour le raccordement d'un dispositif de visualisation (44) sur lequel des données de visualisation (49, 52), fournies par les appareils de commande (15, 16), peuvent être affichées.
